# EUROPEAN PATENT SPECIFICATION

(11) **EP 2 496 758 B1**
(45) Date of publication and mention of the grant of the patent: **06.05.2015**
(21) Application number: 10827958.9
(22) Date of filing: 02.11.2010
(51) Int. Cl.: D21C 11/12, D21C 11/00, F23G 7/04, F23G 5/027, C10B 49/00

(54) **METHOD AND EQUIPMENT FOR TREATMENT OF BLACK LIQUOR AT PULP MILL**
VERFAHREN UND AUSRÜSTUNG ZUR BEARBEITUNG VON SCHWARZLAUGE IN EINEM ZELLSTOFFWERK
PROCÉDÉ ET ÉQUIPEMENT POUR LE TRAITEMENT DE LESSIVE NOIRE DANS UNE USINE DE PÂTE À PAPIER

(30) Priority: 06.11.2009 FI 20096152
(43) Date of publication of application: 12.09.2012
(73) Proprietor: Valmet Technologies Oy, 02150 Espoo (FI)
(72) Inventor: HONKOLA, Timo, FI-36110 Ruutana (FI)
(74) Representative: Kolster Oy Ab
(86) International application number: PCT/FI2010/050872
(87) International publication number: WO 2011/055010

(56) References cited:
- WO-A1-86/07396
- WO-A1-95/08022
- WO-A1-97/23687
- WO-A1-2004/005610
- JP-A- 60 034 691
- US-A- 5 174 860
- US-A- 5 738 758
- US-A- 6 030 493
- US-A1- 2005 284 593
- US-A1- 2006 201 641

## Description

### BACKGROUND OF THE INVENTION

The invention relates to a method for treating pulp mill black liquor in order to recover chemicals and energy contained therein. The invention further relates to equipment for treating pulp mill black liquor in order to recover chemicals and energy contained therein.

A pulping process treats wood material, generally wood-chips, by means of heat and chemicals by cooking it in a chemical solution containing, inter alia, lye. This is called pulp cooking. The object of the treatment is to remove fibre-binding lignin. In soda cooking the cooking chemical is expressly sodium hydroxide (NaOH). After cooking the fibres detached from wood material, i.e. fibre mass, is separated from the cooking chemical, in which various binders in wood material, such as lignin and inorganic matter dissolved during cooking remain. The chemical mixture separated after cooking, i.e. black liquor, is evaporated in an evaporating plant in order to remove water and to provide a combustible material that contains as little water as possible. This material obtained from the final stage of the evaporating plant and fed for combustion may have a dry solids content of up to 85%.

Conventionally, black liquor is burned in a recovery boiler, whereby vapour, and by means of vapour electricity is produced for use as energy at the mill and optionally for sale. The inorganic part of the black liquor remaining from the combustion is removed from the recovery boiler as a molten salt, which is recycled for producing cooking chemicals. This is disclosed, for instance, in Finnish patents 82494 and 91290.

Attempts have been made to replace the recovery boiler by gasification of black liquor, for instance, but in practice it is not yet a commercially feasible solution.

WO publication 2004/005610 discloses a solution in which black liquor is pyrolyzed and the coke obtained in pyrolysis is gasified. However, this process is cumbersome in practice and it requires a separate, expensive gasification plant. US 2006/201641 discloses a method for treating black liquor particularly derived from non-wood pulp, by heating with an alkaline earth metal oxide in a toroidal fluidised bed reactor at a temperature of above 650 °C. WO 86/07396 discloses a process for recovering cooking chemicals and energy from cellulose waste liquors obtained in the pulp and paper industry. US 6030493 discloses a process for recovering chemicals and energy from spent liquor obtained when producing paper pulp by chemical delignificatation of fibrous raw material. US 5174860 discloses a kraft black liquor recovery system utilizing three separate reactors for liquor pyrolysis, sulfate reduction and carbon plus organics combustion, respectively. WO 95/08022 discloses an improved continuous process for the exploitation of cellulose production process wastes. WO 97/23687 discloses a method wherein black liquor from a kraft pulping process is gasified in a fluidized bed reactor in the presence of solid calcium compounds which react with the sulfur compounds to produce solid CaS.

### BRIEF DESCRIPTION OF THE INVENTION

The object of this invention is to provide a method and equipment for treating black liquor, by which a recovery boiler may be eliminated from the entire process and which is simple and easy to implement mainly with the existing pulp mill apparatuses.

The method of the invention is characterized by
- introducing black liquor into a pyrolysis reactor comprising a substantially oxygen-free space,
- feeding into the pyrolysis reactor causticizing material that consists of sodium oxide (Na₂O) and a metal oxide (MₓO_{y}) and that is heated in a burning unit, whereby the black liquor is gasified and forms gaseous components and solid matter remains,
- conveying the gaseous components formed in the pyrolysis reactor for further utilization,
- conveying the solid matter formed in the pyrolysis reactor into the burning unit, where the combustible matter contained therein burns by means of oxygen contained in the air fed into the burning unit and causticizing material consisting of sodium oxide (Na₂O) and a metal oxide (MₓO_{y}) remains,
- returning part of the causticizing material formed in the burning unit to the pyrolysis reactor and conveying part to a dissolving vat, where water is added thereto, whereby sodium hydroxide (NaOH) and metal oxide (MₓO_{y}) are formed,
- returning the formed sodium hydroxide (NaOH) back to the pulping process and at least major part of the remaining metal oxide (MₓO_{y}) to the burning unit, where it forms the causticizing material with the sodium oxide (Na₂O).

The equipment of the invention is characterized by comprising:
- a burning unit,
- a pyrolysis reactor, into which black liquor is fed and where black liquor is pyrolysed is a substantially oxygen-free space and forms gaseous components and solid matter,
- means for conveying the gaseous components formed in the pyrolysis reactor for utilization,
- means for conveying the solids formed in the pyrolysis reactor to the burning unit, where the combustible material burns forming flue gases, and causticizing material consisting of sodium oxide (Na₂O) and a metal oxide (MₓO_{y}) is formed,
- means for feeding part of the causticizing material heated in the burning unit into the pyrolysis reactor and feeding part into a dissolving reactor, whereby sodium hydroxide (NaOH) and metal oxide (MₓO_{y}) are formed, and
- means for conveying the sodium hydroxide (NaOH) back to the pulping process and at least major part of the remaining metal oxide (MₓO_{y}) to the burning unit where it forms the causticizing material with the sodium oxide (Na₂O).

The basic idea of the invention is that black liquor is pyrolyzed by feeding the black liquor and solid causticizing material that contains metal oxide and is heated in a burning unit, preferably in a fluidized-bed boiler or a circulating fluidized bed boiler, with the black liquor into one and the same pyrolysis reactor. In the pyrolysis reactor the black liquor is heated to a suitable temperature in a substantially oxygen-free space, by means of the heat in the causticizing material, so that volatile substances in the black liquor transform to a gaseous state. When necessary, the pyrolysis reactor may be subjected to heating or cooling in order to arrange the temperature to a desired range. Further, the basic idea of the invention is that gaseous components are separated from solids and conveyed for utilization in production of electricity, for instance, and the solids, in turn, are conveyed back to the burning unit, where carbon and sodium carbonate will burn forming carbon dioxide and causticizing material, i.e. a compound of sodium oxide and metal oxide, heating at the same time the causticizing material to a desired temperature. Yet another basic idea of the invention is that part of the causticizing material formed in the burning unit is returned to the pyrolysis reactor and part is conveyed for dissolution to be mixed with water, thus forming sodium hydroxide, which is returned to the cooking process, and metal oxide, which is returned to the burning unit, where it is bound with sodium oxide and thus forms causticizing material.

The method of the invention has an advantage that one chemical cycle allows recovery of energy and chemicals. In addition, the gaseous components or the pyrolysis oil separated therefrom by condensation may be used as a substitute for a fossil fuel, or when necessary, it may be further refined to a traffic fuel. A further advantage is that the pyrolysis being fast, the formation of gases is maximized. Moreover, because the temperature in pyrolysis is lower than that in the recovery boiler, corrosion and fouling problems of the conventional recovery boilers are avoided.

### BRIEF DESCRIPTION OF THE FIGURES

The invention will be described in greater detail in connection with the attached drawings, in which
Figure 1 shows schematically an apparatus for applying the method of the invention and
Figure 2 shows schematically a second apparatus for applying the method of the invention.

### DETAILED DESCRIPTION OF THE INVENTION

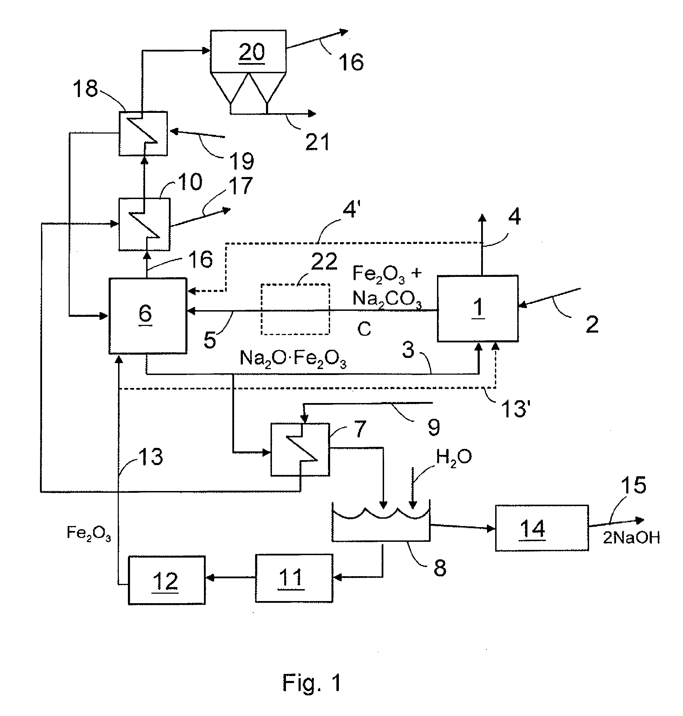

Figure 1 shows a pyrolysis reactor 1, into which black liquor 2 is fed. Into the pyrolysis reactor 2 is also fed hot causticizing material 3 that contains a compound of sodium oxide (Na₂O) and a metal oxide, here iron oxide (Fe₂O₃) by way of example. The causticizing material heats the black liquor which is gasified in a substantially oxygen-free space into a product gas, and solid matter remains.

The product gases 4 formed in the pyrolysis reactor are conveyed for further processing and for other use. The solid material 5, which is formed in the pyrolysis reactor 1 and which contains metal oxide, in this example iron oxide (Fe₂O₃), and sodium carbonate (Na₂CO₃) and carbon (C), is conveyed for combustion in a burning unit 6, preferably a fluidized-bed boiler or a circulating fluidized bed boiler.

Combustible material obtained from pyrolysis in connection with burning in the burning unit 6, i.e. carbon and soda burn resulting in carbon dioxide (CO₂) and a solid compound (Na₂O·Fe₂O₃) of sodium oxide (Na₂O) and a metal oxide, in this example iron oxide (Fe₂O₃), which compound constitutes the causticizing material. This causticizing material is conveyed partly back to the pyrolysis reactor 1, but part of it is advantageously conveyed via a heat exchanger 7 to a dissolving vat 8. The heat exchanger 7 heats the feed water 9 for steam necessary for power production prior to its actual vaporization in a steam generator 10 to be explained later. When necessary, the heat exchanger may also be omitted and part of the material may be conveyed directly to the dissolving vat 8. Instead of one metal oxide it is also possible to use a mixture of two or more metal oxides.

In the dissolving vat 8 the sodium oxide (Na₂O) in the solid compound (Na₂O·Fe₂O₃) forms with water sodium hydroxide (NaOH) and there will remain a solid metal oxide, in this example iron oxide (Fe₂O₃), which is conveyed 13 after washing 11 and drying 12 back to the burning unit 6. The sodium hydroxide (NaOH), in turn, is conveyed after dissolving 8 through filtering 14 back to cooking 15.

Flue gases 16 which contain carbon dioxide (CO₂) and which were formed in the burning unit 6 are conveyed to the steam generator 10, into which the heated feed water 9 from the heat exchanger 7 is conveyed for being vaporized. From the steam generator 10 the formed vapour 17 is conveyed, for instance, to power production or other suitable point in the process. The steam generator as such is not necessary for the invention and, if so desired, it may be omitted.

The flue gases are forwarded from the steam generator 10 to a second heat exchanger 18, to which combustion air 19 to be fed into the burning unit 6 is conveyed. The combustion air is heated in the second heat exchanger 18 and conveyed to the burning unit 6. From the second heat exchanger 18 the flue gases 16 are further conveyed advantageously to a filter 20, where ashes 21 are separated therefrom and the flue gases are conveyed further on to a chimney or to be processed in another manner. The second heat exchanger is not necessary per se either for the invention, and if so desired, it may also be omitted.

In addition to iron oxide, also many other metal oxides behave and react in a corresponding manner, so the iron oxide may be replaced in the formula by any appropriate metal oxide. These include, among other things, titanium dioxide (TiO₂) or manganese oxide (Mn₂O₃).

In using iron oxide the direct causticizing reactions occur in the process as follows:

Fe₂O₃ + Na₂CO₃ => Na₂O·Fe₂O₃ + CO₂ (1)

Na₂O·Fe₂O₃ + H₂O => 2NaOH + Fe₂O₃ (2)

In general presentation the formulae are of the form:

bNa_{2O}·CMₓO_{y} + aNa₂CO₃ => (a+b)Na₂O·cMₓO_{y} + aCO₂ (3)

(a+b)Na₂O·cMₓO_{y} + H₂O => 2aNaOH + bNa₂O·cMₓO_{y} (4)

where MₓO_{y} is a metal oxide.

Reaction (1) starts in the pyrolysis reactor and continues still in the burning unit. The iron oxide may be replaced by other suitable metal oxides, reactions being the same, in principle.

In case the temperature in the causticizing material is excessively high, the temperature of the pyrolysis reactor is to be controlled by cooling. In that case it is possible, for instance, to feed into the pyrolysis reactor part of the cool metal oxide to be mainly fed into the burning unit, which is indicated by a dashed line 13' in Figure 1, whereby it cools the temperature of the pyrolysis reactor to a suitable level. Temperature control may be performed, for instance, by changing the amount of iron oxide to be conveyed into the pyrolysis reactor.

The product gas 4 formed in the pyrolysis reactor may be forwarded either for direct use or to be processed in the manufacture of traffic fuel, for instance. Likewise, they may be conveyed as such for condensation so as to form in part oil and the remaining uncondensed gases may be further conveyed for use as a fuel or for another appropriate purpose. When necessary, part of the product gases may be conveyed as an auxiliary fuel to the burning unit 6, as indicated by a dashed line 4'.

The pyrolysis reactor per se may have various configurations. It may be a fluidized-bed reactor, a rotating drum or another type of reactor known per se. It is essential that it enables as good contact as possible between the black liquor and the causticizing material, and thus fast heat transfer from the causticizing material to the black liquor. The pyrolysis reactor 1 is a substantially oxygen-free space per se, the temperature of which is advantageous within the range of 400 to 600°C. Consequently, the temperature in the causticizing material to be fed into the pyrolysis reactor has to be higher than that of the pyrolysis reactor, whereby advantageously the temperature in the burning unit 6 is within the range of 600 to 1000 °C. In that case, the causticizing material is correspondingly within the same temperature range, when it is removed from the burning unit and fed into the pyrolysis reactor.

In the burning unit, which most preferably is a fluidized-bed boiler or the like, carbon burns into carbon dioxide and heats it. When necessary, it is possible to burn in the burning unit additionally some other known fuel in order to provide extra heat. In this manner it is possible to burn all the carbon and utilize the energy from the carbon for heating the causticizing material. From the burning unit the formed compound of sodium oxide and metal oxide (Na₂O·Fe₂O₃) is conveyed, in part, to the pyrolysis reactor 1 and, in part, as earlier stated, to the dissolving vat for forming sodium hydroxide.

In some cases it may be useful to employ a separate supplementary reactor between the pyrolysis reactor 1 and the burning unit 6. This supplementary reactor 22 is denoted by a dashed line in Figure 1. The supplementary reactor 22 allows the material to have more reaction time, whereby less non-reacted sodium carbonate (Na₂CO₃) is introduced into the burning unit, which reduces possible blocking problems resulting from melting thereof.

In the burning unit the combustion may also be carried out as oxygen combustion and the resulting carbon dioxide (CO₂) may be recovered.

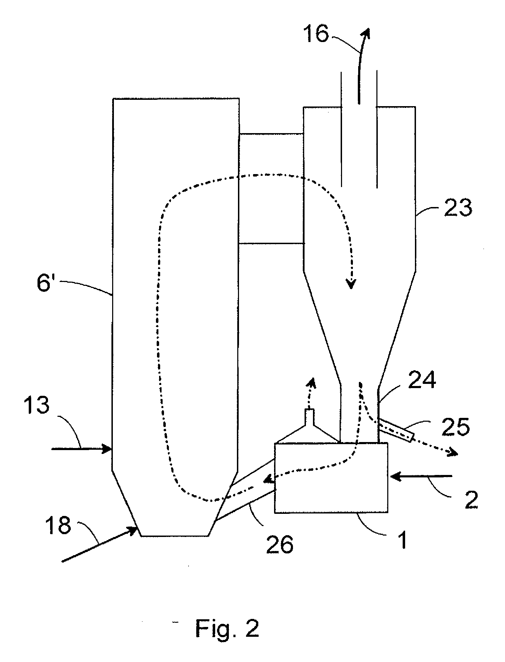

Figure 2 shows schematically a second embodiment of the invention, in which a pyrolysis reactor 1 and a circulating fluidized-bed boiler serving as a burning unit 6 are configured to form one whole. In connection with this figure, the operation of the process is per se the same as shown in connection with Figure 1, so all the details need not be described separately. Also, like reference numerals refer to like parts.

In this embodiment the burning unit is especially a circulating fluidized-bed boiler 6', which is known per se to a person skilled in the art and therefore its structure and operation need not be described in detail. In that solution, circulating fluidized-bed material circulates from the circulating fluidized-bed boiler 6', along with flue gases, to a separating cyclone 23, where solid matter is separated from the flue gases 16, which are conveyed onwards in the earlier described manner. In the separating cyclone 23 the solid matter falls onto the bottom of the separating cyclone 23 and flows therefrom further on via a channel 24 at the lower end of the separating cyclone 23 into the pyrolysis reactor 1. At the same time, part of the solid matter is separated for being conveyed via a channel 25 to the dissolving vat. From the pyrolysis reactor 1, in turn, a material feed channel 26 leads to a lower part of the circulating fluidized-bed boiler 6', whereto combustion air 18 is also fed. The compound (Na₂O·Fe₂O₃) of sodium oxide and metal oxide is conveyed, in turn, partly in the manner described in connection with Figure 1 to the dissolving vat, and correspondingly, from the dissolving vat, after drying and washing, the dried metal oxide is also conveyed back to the lower part of the circulating fluidized-bed boiler 6'.

This solution allows the actual causticizing reaction to have a long dwelling time in favourable conditions, which enhances the process.

The invention is described above in the specification and the relating drawings by way of example, and it is not restricted thereto in any way, but the scope of protection is defined in accordance with the attached claims. So, individual features of various working examples may be combined and applied in a desired manner to other embodiments. It is essential that the black liquor is pyrolyzed by using separate causticizing material comprising one or more metal oxides and that the solid matter formed in the pyrolysis reactor is burned so as to utilize the carbon incorporated in the black liquor in the heating of the causticizing material and that part of the causticizing material is conveyed from combustion to pyrolysis and part is conveyed to a dissolving vat wherefrom the obtained sodium hydroxy is returned to cooking and the causticizing material is returned to combustion.

## Claims

1. A method for treating pulp mill black liquor in order to recover chemicals and energy contained therein, **characterized by**
- introducing black liquor into a pyrolysis reactor comprising a substantially oxygen-free space,
- feeding into the pyrolysis reactor causticizing material that consists of sodium oxide (Na₂O) and a metal oxide (MₓO_{y}) and that is heated in a burning unit, whereby the black liquor is gasified and forms gaseous components and solid matter remains,
- conveying the gaseous components formed in the pyrolysis reactor for further utilization,
- conveying the solid matter formed in the pyrolysis reactor into the burning unit, where the combustible matter contained therein burns by means of oxygen contained in the air fed into the burning unit and causticizing material consisting of sodium oxide (Na₂O) and a metal oxide (MₓO_{y}) remains,
- returning part of the causticizing material formed in the burning unit to the pyrolysis reactor and conveying part to a dissolving vat, where water is added thereto, whereby sodium hydroxide (NaOH) and metal oxide (MₓO_{y}) are formed,
- returning the formed sodium hydroxide (NaOH) back to the pulping process and at least major part of the remaining metal oxide (MₓO_{y}) to the burning unit, where it forms the causticizing material with the sodium oxide (Na₂O).

2. The method of claim 1, characterized **i**n that part of the remaining metal oxide (MₓO_{y}) is conveyed to the pyrolysis reactor.

3. The method of claim 1 or 2, **characterized in that** in the causticizing material there is used at least one of the following metal oxides: titanium oxide (TiO), iron oxide (Fe₂O₃) and manganese oxide (Mn₂O₃).

4. The method of any one of claims 1 to 3, **characterized in that** the temperature in the pyrolysis reactor is maintained within the range of 400 to 600 °C.

5. The method of any one of the preceding claims, **characterized in that** the temperature in the burning unit is maintained within the range of 600 to 1000 °C.

6. The method of any one of the preceding claims, **characterized in that** the metal oxide (MₓO_{y}) to be conveyed to the burning unit is first washed and thereafter dried prior to conveying it to the burning unit.

7. The method of any one of the preceding claims, **characterized in that** sodium hydroxide (NaOH) formed in the dissolving vat is filtered so as to separate solid matter contained therein prior to conveying it to the pulping process.

8. The method of any one of the preceding claims, **characterized in that** the part of the causticizing material to be conveyed to the dissolving vat is first conveyed to a heat exchanger, where it heats the feed water used for vapour production.

9. The method of any one of the preceding claims, **characteri z e d** in that flue gases formed in the burning unit are conveyed to a vaporizing unit where it vaporizes the feed water conveyed therein.

10. The method of any one of the preceding claims, **characteri z e d** in that the flue gases formed in the burning unit are conveyed to a second heat exchanger, through which combustion air to be fed into the burning unit is conveyed, whereby the flue gases heat the combustion air.

11. The method of any one of the preceding claims, **characteri z e d** in that a fluidized-bed or circulating fluidized-bed boiler is employed as the burning unit.

12. Equipment for treating pulp mill black liquor in order to recover chemicals and energy contained therein, **characterized by** comprising:
- a burning unit,
- a pyrolysis reactor, into which black liquor is fed and where black liquor is pyrolysed is a substantially oxygen-free space and forms gaseous components and solid matter,
- means for conveying the gaseous components formed in the pyrolysis reactor for utilization,
- means for conveying the solids formed in the pyrolysis reactor to the burning unit, where the combustible material burns forming flue gases and causticizing material consisting of sodium oxide (Na₂O) and a metal oxide (MₓO_{y}) is formed,
- means for feeding part of the causticizing material heated in the burning unit into the pyrolysis reactor and feeding part into a dissolving reactor, whereby sodium hydroxide (NaOH) and metal oxide (MₓO_{y}) are formed, and
- means for conveying the sodium hydroxide (NaOH) back to the pulping process and at least major part of the remaining metal oxide (MₓO_{y}) to the burning unit where it forms the causticizing material with the sodium oxide (Na₂O).

13. The equipment of claim 12, **characterized by** comprising means for conveying part of the remaining metal oxide (MₓO_{y}) into the pyrolysis reactor.

14. The equipment of claim 12 or 13, **characterized in that** the causticizing material contains at least one of the following metal oxides: titanium oxide (TiO), iron oxide (Fe₂O₃) and manganese oxide (Mn₂O₃).

15. The equipment of any one of claims 12 to 14, **characterized in that** the temperature in the pyrolysis reactor is 400 to 600 °C.

16. The equipment of any one of claims 12 to 15, **characterized in that** the temperature in the burning unit is 600 to 1000 °C.

17. The equipment of any one of claims 12 to 16, **characterized by** comprising means for washing and drying the metal oxide (MₓO_{y}) to be conveyed to the burning unit prior to conveying it to the burning unit.

18. The equipment of any one of claims 12 to 17, **characterized by** comprising a filtering apparatus for filtering the sodium hydroxide (NaOH) formed in the dissolving vat so as to separate the solid matter therein prior to conveying it to the pulping process.

19. The equipment of any one of claims 12 to 18, **characteri z e d** by comprising a heat exchanger through which part of the causticizing material to be conveyed to the dissolving vat and the feed water to be used in vapour production are conveyed so that the causticizing material heats the feed water.

20. The equipment of any one of claims 12 to 19, **characterized by** comprising a vaporizing unit, through which the flue gases formed in the burning unit and the feed water are conveyed so that the flue gases vaporize the feed water to steam.

21. The equipment of any one of claims 12 to 20, **characterized by** comprising a second heat exchanger, through which the flue gases and the combustion air are conveyed so that the flue gases heat the combustion air.

22. The equipment of any one of claims 12 to 21, **characteri z e d** in that the burning unit is a fluidized-bed boiler.

23. The equipment of any one of claims 12 to 22, **characterized in that** the burning unit is a circulating fluidized-bed boiler.

24. The equipment of claim 23, **characterized in that** the circulating fluidized-bed boiler includes a separating cyclone, whereto the flue gases and the causticizing material therewith are conveyed for being separated from one another, that the separating cyclone is connected at its lower end to communicate with the pyrolysis reactor therebelow so that the separated causticizing material is transferred to the pyrolysis reactor for heating the black liquor and that the pyrolysis reactor is connected to communicate with the lower part of the circulating fluidized-bed reactor so that the solids formed in the pyrolysis reactor are transferred to the circulating fluidized-bed boiler.

## Patentansprüche

1. Verfahren zur Behandlung von Papiermühlenschwarzlauge, um darin enthaltene Chemikalien und Energie zurückzugewinnen, **gekennzeichnet durch**
- Einführen von Schwarzlauge in einen Pyrolysereaktor, der einen im Wesentlichen sauerstofffreien Raum umfasst,
- Zuführen in den Pyrolysereaktor von Kaustifizierungsmaterial, das aus Natriumoxid (Na₂O) und Metalloxid (MₓO_{y}) besteht und das in einer Brenneinheit erwärmt ist, wodurch die Schwarzlauge vergast wird und gasförmige Komponenten bildet und feste Materie zurückbleibt,
- Befördern der in dem Pyrolysereaktor gebildeten gasförmigen Komponenten zur weiteren Verwendung,
- Befördern der in dem Pyrolysereaktor gebildeten festen Materie in die Brenneinheit, wo die darin enthaltene brennbare Materie mittels Sauerstoffs, der in der in die Brenneinheit zugeführten Luft enthaltenen ist, verbrennt und das Kaustifizierungsmaterial, das aus Natriumoxid (Na₂O) und Metalloxid (MₓO_{y}) besteht, zurückbleibt,
- Rückführen eines Teils des in der Brenneinheit gebildeten Kaustifizierungsmaterials zu dem Pyrolysereaktor und Befördern eines Teils zu einem Auflösungstrog, wo Wasser dazu gegeben wird, wodurch Natriumhydroxid (NaOH) und Metalloxid (MₓO_{y}) gebildet werden,
- Rückführen des gebildeten Natriumhydroxids (NaOH) zurück zu dem Aufschlussprozess und zumindest den größten Teil des zurückbleibenden Metalloxids (MₓO_{y}) zu der Brenneinheit, wo es mit dem Natriumoxid (Na₂O) das Kaustifizierungsmaterial bildet.

2. Verfahren nach Anspruch 1, **dadurch gekennzeichnet, dass** ein Teil des zurückbleibenden Metalloxids (MₓO_{y}) zu dem Pyrolysereaktor befördert wird.

3. Verfahren nach Anspruch 1 oder 2, **dadurch gekennzeichnet, dass** in dem Kaustifizierungsmaterial zumindest eines der folgenden Metalloxide verwendet wird: Titanoxid (TiO), Eisenoxid (Fe₂O₃) und Manganoxid (Mn₂O₃).

4. Verfahren nach einem der Ansprüche 1 bis 3, **dadurch kennzeichnet, dass** die Temperatur in dem Pyrolysereaktor innerhalb des Bereiches von 400 bis 600°C beibehalten wird.

5. Verfahren nach einem der vorhergehenden Ansprüche, **dadurch gekennzeichnet, dass** die Temperatur in der Brenneinheit innerhalb des Bereichs von 600 bis 1000°C beibehalten wird.

6. Verfahren nach einem der vorhergehenden Ansprüche, **dadurch gekennzeichnet, dass** das zu der Brenneinheit zu befördernde Metalloxid (MₓO_{y}) zuerst gewaschen wird und danach vor dessen Befördern zu der Brenneinheit getrocknet wird.

7. Verfahren nach einem der vorangegangenen Ansprüche, **dadurch gekennzeichnet, dass** das in dem Auflösungstrog gebildete Natriumhydroxid (NaOH) so filtriert wird, um darin enthaltene feste Materie vor dessen Befördern zu dem Aufschlussprozess zu separieren.

8. Verfahren nach einem der vorangegangenen Ansprüche, **dadurch gekennzeichnet, dass** der Teil des zu dem Auflösungstrog zu befördernde Kaustifizierungsmaterials zuerst zu einem Wärmeaustauscher befördert wird, wo es das für die Dampfproduktion verwendete Zuführwasser erwärmt.

9. Verfahren nach einem der vorangegangenen Ansprüche, **dadurch gekennzeichnet, dass** in der Brenneinheit gebildete Rauchgase zu einer Verdampfungseinheit befördert werden, wo sie das darin beförderte Zuführwasser verdampfen.

10. Verfahren nach einem der vorangegangenen Ansprüche, **dadurch gekennzeichnet, dass** die in der Brenneinheit gebildeten Rauchgase zu einem zweiten Wärmeaustauscher befördert werden, durch den in die Brenneinheit zuzuführende Verbrennungsluft befördert wird, wodurch die Rauchgase die Verbrennungsluft erwärmen.

11. Verfahren nach einem der vorangegangenen Ansprüche, **dadurch gekennzeichnet, dass** ein Wirbelschicht- oder zirkulierender Wirbelschichtkessel als die Brenneinheit verwendet wird.

12. Einrichtung zur Behandlung von Papiermühlenschwarzlauge, um darin enthaltene Chemikalien und Energie zurückzugewinnen, **gekennzeichnet durch** Umfassen:
- einer Brenneinheit,
- eines Pyrolysereaktors, in welchen Schwarzlauge zugeführt wird und wo Schwarzlauge pyrolisiert wird, der ein im Wesentlichen sauerstofffreier Raum ist und gasförmige Komponenten und feste Materie bildet,
- Beförderungsmittel für die in dem Pyrolysereaktor gebildeten gasförmigen Komponenten zur Verwendung,
- Beförderungsmittel für die in dem Pyrolysereaktor gebildeten Feststoffe zu der Brenneinheit, wo das brennbare Material verbrennt, das Rauchgase und Kaustifizierungsmaterial, das aus Natriumoxid (Na₂O) und einem Metalloxid (MₓO_{y}) besteht, bildet,
- Mittel zum Zuführen eines Teils des in der Brenneinheit erwärmten Kaustifizierungsmaterial in den Pyrolysereaktor und zum Zuführen eines Teils in einen Auflösungsreaktor, wobei Natriumhydroxid (NaOH) und Metalloxid (MₓO_{y}) gebildet werden, und
- Beförderungsmittel für das Natriumhydroxid (NaOH) zurück zu dem Aufschlussprozess und zumindest des größten Teils des zurückbleibenden Metalloxids (MₓO_{y}) zu der Brenneinheit, wo es mit dem Natriumoxid (Na₂O) das Kaustifizierungsmaterial bildet.

13. Einrichtung nach Anspruch 12, **gekennzeichnet durch** Umfassen von Beförderungsmittel für einen Teil des zurückbleibenden Metalloxids (MₓO_{y}) in den Pyrolysereaktor.

14. Einrichtung nach Anspruch 12 oder 13, **dadurch gekennzeichnet, dass** das Kaustifizierungsmaterial zumindest eines der folgenden Metalloxide enthält: Titanoxid (TiO), Eisenoxid (Fe₂O₃) und Manganoxid (Mn₂O₃).

15. Einrichtung nach einem der Ansprüche 12 bis 14, **dadurch gekennzeichnet, dass** die Temperatur in dem Pyrolysereaktor 400 bis 600°C ist.

16. Einrichtung nach einem der Ansprüche 12 bis 15, **dadurch gekennzeichnet, dass** die Temperatur in der Brenneinheit 600 bis 1000°C ist.

17. Einrichtung nach einem der Ansprüche 12 bis 16, **gekennzeichnet durch** Umfassen von Mitteln zum Waschen und Trocknen des zu der Brenneinheit zu befördernden Metalloxids (MₓO_{y}) vor dessen Beförderung zu der Brenneinheit.

18. Einrichtung nach einem der Ansprüche 12 bis 17, **gekennzeichnet durch** Umfassen eines Filterapparats zum Filtern des in dem Auflösungstrog gebildeten Natriumhydroxids (NaOH), sodass die feste Materie darin separiert wird, vor dessen Befördern zu dem Aufschlussprozess.

19. Einrichtung nach einem der Ansprüche 12 bis 18, **gekennzeichnet durch** Umfassen eines Wärmeaustauschers, **durch** welchen ein Teil des zu dem Auflösungstrog zu befördernden Kaustifizierungsmaterials und des in der Dampfproduktion zu verwenden Zuführwassers so befördert werden, dass das Kaustifizierungsmaterial das Zuführwasser erwärmt.

20. Einrichtung nach einem der Ansprüche 12 bis 19, **gekennzeichnet durch** Umfassen einer Verdampfungseinheit, **durch** welche die in der Brenneinheit gebildeten Rauchgase und das Zuführwasser so befördert werden, dass die Rauchgase das Zuführwasser zu Dampf verdampfen.

21. Einrichtung nach einem der Ansprüche 12 bis 20, **gekennzeichnet durch** Umfassen eines zweiten Wärmeaustauschers, **durch** welchen die Rauchgase und die Verbrennungsluft so befördert werden, dass die Rauchgase die Verbrennungsluft erwärmen.

22. Einrichtung nach einem der Ansprüche 12 bis 21, **dadurch gekennzeichnet, dass** die Brenneinheit ein Wirbelschichtkessel ist.

23. Einrichtung nach einem der Ansprüche 12 bis 22, **dadurch gekennzeichnet, dass** die Brenneinheit ein zirkulierender Wirbelschichtkessel ist.

24. Einrichtung nach Anspruch 23, **dadurch gekennzeichnet, dass** der zirkulierende Wirbelschichtkessel einen trennenden Zyklon beinhaltet, zu welchem die Rauchgase und das Kaustifizierungsmaterial damit befördert werden, um voneinander separiert zu werden, dass der trennende Zyklon an seinem unteren Ende verbunden ist, um mit dem Pyrolysereaktor darunter so zu kommunizieren, dass das separierte Kaustifizierungsmaterial an den Pyrolysereaktor zum Erwärmen der Schwarzlauge transferiert wird und dass der Pyrolysereaktor verbunden ist, um mit dem unteren Teil des zirkulierenden Wirbelschichtreaktors so zu kommunizieren, dass die in dem Pyrolysereaktor gebildeten Feststoffe an den zirkulierenden Wirbelschichtkessel transferiert werden.

## Revendications

1. Procédé pour le traitement de liqueur noire d'usine de production de pâte à papier, afin de récupérer des produits chimiques et de l'énergie contenus dans ladite liqueur noire, **caractérisé par** les étapes suivantes :
- introduire une liqueur noire dans un réacteur de pyrolyse comprenant un espace pratiquement exempt d'oxygène,
- fournir, dans le réacteur de pyrolyse, une matière de caustification qui consiste en de l'oxyde de sodium (Na₂O) et un oxyde métallique (MₓO_{y}) et qui est chauffée dans une unité de brûlage, dans laquelle la liqueur noire est gazéifiée et forme des composants gazeux et des résidus de matière solide,
- transporter les composants gazeux formés dans le réacteur de pyrolyse pour une prochaine utilisation,
- transporter la matière solide formée dans le réacteur de pyrolyse, jusqu'à l'unité de brûlage où la matière combustible contenue dans ladite matière solide brûle grâce à de l'oxygène contenu dans l'air introduit dans l'unité de brûlage et des résidus de matière de caustification consistant en de l'oxyde de sodium (Na₂O) et un oxyde métallique (MₓO_{y}),
- faire revenir, dans le réacteur de pyrolyse, une partie de la matière de caustification formée dans l'unité de brûlage, et à transporter une partie jusqu'à une cuve de dissolution dans laquelle de l'eau est ajoutée à ladite partie de matière, de telle sorte que de l'hydroxyde de sodium (NaOH) et un oxyde métallique (MₓO_{y}) sont formés,
- faire revenir à nouveau l'hydroxyde de sodium (NaOH) formé jusqu'au processus de réduction en pâte, et à faire revenir au moins une majorité de l'oxyde métallique résiduel (MₓO_{y}) jusqu'à l'unité de brûlage où elle forme la matière de caustification avec l'oxyde de sodium (Na₂O).

2. Procédé selon la revendication 1, **caractérisé en ce qu'**une partie de l'oxyde métallique résiduel (MₓO_{y}) est transportée jusqu'au réacteur de pyrolyse.

3. Procédé selon la revendication 1 ou 2, **caractérisé en ce que**, dans la matière de caustification, au moins l'un des oxydes métalliques suivants est utilisé : de l'oxyde de titane (TiO), de l'oxyde de fer (Fe₂O₃) et de l'oxyde de manganèse (Mn₂O₃).

4. Procédé selon l'une quelconque des revendications 1 à 3, **caractérisé en ce que** la température dans le réacteur de pyrolyse est maintenue dans une plage comprise entre 400°C et 600°C.

5. Procédé selon l'une quelconque des revendications précédentes, **caractérisé en ce que** la température dans l'unité de brûlage est maintenue dans une plage comprise entre 600°C et 1000°C.

6. Procédé selon l'une quelconque des revendications précédentes, **caractérisé en ce que** l'oxyde métallique (MₓO_{y}) devant être transporté jusqu'à l'unité de brûlage est d'abord lavé, puis séché avant son transport jusqu'à l'unité de brûlage.

7. Procédé selon l'une quelconque des revendications précédentes, **caractérisé en ce que** de l'hydroxyde de sodium (NaOH) formé dans la cuve de dissolution est filtré, de façon à séparer la matière solide contenue dans ledit hydroxyde de sodium, avant de le transporter jusqu'au processus de réduction en pâte.

8. Procédé selon l'une quelconque des revendications précédentes, **caractérisé en ce que** la partie de la matière de caustification à transporter jusqu'à la cuve de dissolution est d'abord transportée jusqu'à un échangeur thermique où il chauffe l'eau d'alimentation utilisée pour la production de vapeur.

9. Procédé selon l'une quelconque des revendications précédentes, **caractérisé en ce que** les gaz brûlés formés dans l'unité de brûlage sont transportés jusqu'à une unité de vaporisation qui vaporise l'eau d'alimentation transportée dans ladite unité de vaporisation.

10. Procédé selon l'une quelconque des revendications précédentes, **caractérisé en ce que** les gaz brûlés formés dans l'unité de brûlage sont transportés jusqu'à un second échangeur thermique au travers duquel est transporté de l'air de combustion nécessaire à l'unité de brûlage, de telle sorte que les gaz brûlés chauffent l'air de combustion.

11. Procédé selon l'une quelconque des revendications précédentes, **caractérisé en ce qu'**une chaudière à lit fluidisé ou à lit fluidisé de circulation est utilisée comme unité de brûlage.

12. Equipement pour le traitement de liqueur noire dans une usine de production de pâte à papier, afin de récupérer des produits chimiques et de l'énergie contenus dans ladite liqueur, ledit équipement étant **caractérisé en ce qu'**il comprend :
- une unité de brûlage,
- un réacteur de pyrolyse, alimenté en liqueur noire et où de la liqueur noire est pyrolysée, est un espace pratiquement exempt d'oxygène et forme des composants gazeux et de la matière solide,
- des moyens pour transporter les composants gazeux formés dans le réacteur de pyrolyse afin d'être utilisés,
- des moyens pour transporter les solides formés dans le réacteur de pyrolyse jusqu'à l'unité de brûlage, dans laquelle la matière combustible brûle en formant des gaz brûlés, et de la matière de caustification consistant en la formation d'un oxyde de sodium (Na₂O) et d'un oxyde métallique (MₓO_{y}),
- des moyens pour fournir au réacteur de pyrolyse une partie de la matière de caustification chauffée dans l'unité de brûlage, et pour fournir une partie à une cuve de dissolution, dans laquelle de l'hydroxyde de sodium (NaOH) et un oxyde métallique (MₓO_{y}) sont formés, et
- des moyens pour transporter l'hydroxyde de sodium (NaOH) en retour jusqu'au processus de réduction en pâte, et pour transporter au moins une majeure partie de l'oxyde métallique résiduel (MₓO_{y}) jusqu'à l'unité de brûlage où elle forme la matière de caustification avec l'oxyde de sodium (Na₂O).

13. Equipement selon la revendication 12, **caractérisé en ce qu'**il comprend des moyens pour transporter dans le réacteur de pyrolyse une partie de l'oxyde métallique résiduel (MₓO_{y}).

14. Equipement selon la revendication 12 ou 13, **caractérisé en ce que** la matière de caustification contient au moins l'un des oxydes métalliques suivants : oxyde de titane (TiO), oxyde de fer (Fe₂O₃) et oxyde de manganèse (Mn₂O₃).

15. Equipement selon l'une quelconque des revendications 12 à 14, **caractérisé en ce que** la température dans le réacteur de pyrolyse est de 400°C à 600°C.

16. Equipement selon l'une quelconque des revendications 12 à 15, **caractérisé en ce que** la température dans l'unité de brûlage est de 600°C à 1000°C.

17. Equipement selon l'une quelconque des revendications 12 à 16, **caractérisé en ce qu'**il comprend des moyens pour laver et sécher l'oxyde métallique (MₓO_{y}) à transporter jusqu'à l'unité de brûlage, avant le transport dudit oxyde métallique jusqu'à l'unité de brûlage.

18. Equipement selon l'une quelconque des revendications 12 à 17, **caractérisé en ce qu'**il comprend un appareil de filtration pour filtrer l'hydroxyde de sodium (NaOH) formé dans la cuve de dissolution, de façon à séparer la matière solide contenue dans ledit hydroxyde de sodium, avant de le transporter jusqu'au processus de réduction en pâte.

19. Equipement selon l'une quelconque des revendications 12 à 18, **caractérisé en ce qu'**il comprend un échangeur thermique au travers duquel une partie de la matière de caustification à transporter jusqu'à la cuve de dissolution et l'eau d'alimentation à utiliser pour produire de la vapeur sont transportés, de sorte que la matière de caustification chauffe l'eau d'alimentation.

20. Equipement selon l'une quelconque des revendications 12 à 19, **caractérisé en ce qu'**il comprend une unité de vaporisation au travers de laquelle les gaz brûlés formés dans l'unité de brûlage et l'eau d'alimentation sont transportés, de sorte que les gaz brûlés vaporisent l'eau d'alimentation sous forme de vapeur.

21. Equipement selon l'une quelconque des revendications 12 à 20, **caractérisé en ce qu'**il comprend un second échangeur thermique au travers duquel les gaz brûlés et l'air de combustion sont transportés, de sorte que les gaz brûlés chauffent l'air de combustion.

22. Equipement selon l'une quelconque des revendications 12 à 21, **caractérisé en ce que** l'unité de brûlage est une chaudière à lit fluidisé.

23. Equipement selon l'une quelconque des revendications 12 à 22, **caractérisé en ce que** l'unité de brûlage est une chaudière à lit fluidisé de circulation.

24. Equipement selon la revendication 23, **caractérisé en ce que** la chaudière à lit fluidisé de circulation comprend un cyclone de séparation jusqu'auquel les gaz brûlés et la matière de caustification associée à ces gaz sont transportés, pour être séparés l'un de l'autre, **en ce que** le cyclone de séparation est relié, au niveau de son extrémité inférieure, pour communiquer avec le réacteur de pyrolyse placé en dessous dudit cyclone de séparation, de sorte que la matière de caustification séparée est transférée jusqu'au réacteur de pyrolyse, pour chauffer la liqueur noire, et **en ce que** le réacteur de pyrolyse est relié pour communiquer avec la partie inférieure du réacteur à lit fluidisé de circulation, de sorte que les solides formés dans le réacteur de pyrolyse sont transférés jusqu'à la chaudière à lit fluidisé de circulation.
